# EUROPÄISCHE PATENTANMELDUNG

(11) **EP 4 287 153 A2**
(43) Veröffentlichungstag der Anmeldung: **06.12.2023**
(21) Anmeldenummer: 23173905.3
(22) Anmeldetag: 17.05.2023
(51) Int. Cl.: G08B 21/06

(54) **VERFAHREN ZUR MÜDIGKEITSBEKÄMPFUNG EINES FAHRERS EINES KRAFTFAHRZEUGS SOWIE ELEKTRONISCHE RECHENEINRICHTUNG**

(30) Priorität: 01.06.2022 DE 102022205571
(71) Anmelder: VOLKSWAGEN AG, 38440 Wolfsburg (DE)
(72) Erfinder: Meier, Andreas, 38364 Schöningen (DE)

(57) **Zusammenfassung**

Die Erfindung betrifft zwei Verfahren zur Müdigkeitsbekämpfung eines Fahrers eines Kraftfahrzeugs, wobei bei dem zweiten Verfahren eine Berechnungsvorschrift herangezogen wird, mittels welcher anhand eines Parametersatzes eine Müdigkeitsverlaufskurve (MVK) erstellt werden kann, welche eine Müdigkeitsentwicklung des Fahrers über die Zeit (t) repräsentiert (V20), konkrete Werte für den Parametersatz für eine vorausliegende Fahrtstrecke ermittelt werden (V21), mittels der Berechnungsvorschrift unter Verwendung der ermittelten Werte für den Parametersatz die Müdigkeitsverlaufskurve (MVK) für die vorausliegende Fahrtstrecke ermittelt wird (V22), der Müdigkeitsverlaufskurve (MVK) analysiert wird (V23), und in Abhängigkeit von einem Ergebnis der Analyse eine Gegenmaßnahme ausgelöst wird, durch welche wenigstens ein Wert eines veränderbaren Parameters des Parametersatzes gezielt verändert wird (V24).

## Beschreibung

Die vorliegende Erfindung betrifft zwei Verfahren zur Müdigkeitsbekämpfung eines Fahrers eines Kraftfahrzeugs sowie eine elektronische Recheneinrichtung.

Die US 2006/0068693 A1 offenbart ein Verfahren, bei welchem ein Sauerstoffmangel von Fahrzeuginsassen erkannt wird und dieser Sauerstoffmangel beseitigt wird. Durch die Beseitigung des Sauerstoffmangels kann eine Höhenkrankheit von Fahrzeuginsassen bei Fahrten im Hochgebirge verhindert werden. Dafür ist eine Vorrichtung vorgesehen, welche dazu eingerichtet ist, eine Sauerstoffsättigung des Fahrzeuginsassen im Blut sowie eine Sauerstoff- oder Kohlenstoffdioxidkonzentration im Fahrzeuginnenraum zu ermitteln. Bei Ermitteln des Sauerstoffmangels kann die Luft in der Fahrzeugkabine konditioniert werden, um dem Sauerstoffmangel entgegenzuwirken.

Darüber hinaus offenbart die US 10 235 859 B1 ein Verfahren zur Verringerung von Schläfrigkeit am Steuer. Bei dem Verfahren werden schläfrige Fahrzustände eines Fahrers eines Fahrzeugs erkannt oder vorhergesagt und Maßnahmen zur Verringerung ergriffen, um dadurch die Sicherheit des Fahrers und anderer Personen oder Fahrzeuge in der Nähe des Fahrzeugs zu erhöhen. Die Schläfrigkeit des Fahrers kann anhand von persönlichen Gesundheits-/Fitnessdaten des Fahrers ermittelt werden.

Darüber hinaus offenbart die KR 20 200 071 195 A ein Alarmsystem zur Erkennung von Schläfrigkeit bei einem Fahrer.

Es ist die Aufgabe der Erfindung, eine Lösung zu schaffen, welche ein besonders zuverlässiges Ermitteln einer Müdigkeit eines Fahrers eines Kraftfahrzeugs sowie ein besonders effektives Entgegenwirken der Müdigkeit ermöglicht.

Diese Aufgabe wird durch die Gegenstände der unabhängigen Ansprüche gelöst. Weitere mögliche Ausgestaltungen der Erfindung sind in den Unteransprüchen, der Beschreibung und den Figuren offenbart.

Die Erfindung betrifft ein erstes Verfahren zur Müdigkeitsbekämpfung eines Fahrers eines Kraftfahrzeugs. Bei dem Kraftfahrzeug handelt es sich insbesondere um einen Kraftwagen, insbesondere um einen Personenkraftwagen. Das Verfahren ist dazu vorgesehen, eine Möglichkeit zu schaffen, wie einer Müdigkeit des Fahrers des Kraftfahrzeugs entgegengewirkt werden kann und somit eine Müdigkeitsentwicklung des Fahrers beeinflusst werden kann.

Bei dem Verfahren ist es vorgesehen, dass anhand wenigstens eines Bewertungskriteriums eine Müdigkeitsklasse ermittelt wird, welche die Müdigkeit des Fahrers repräsentiert. Das bedeutet, dass mehrere unterschiedliche Müdigkeitsklassen vorgegeben sind und anhand des wenigstens einen Bewertungskriteriums ermittelt wird, welcher Müdigkeitsklasse der Fahrer in seinem aktuellen Zustand zuzuordnen ist. Das Ermitteln der Müdigkeitsklasse kann insbesondere mittels einer elektronischen Recheneinrichtung erfolgen. Bei dem Verfahren ist es weiterhin vorgesehen, dass über eine Zuordnungsvorschrift, in welcher unterschiedlichen Müdigkeitsklassen jeweilige Gegenmaßnahmen zugeordnet sind, wenigstens eine Gegenmaßnahme für die ermittelte Müdigkeitsklasse ausgewählt wird. Diese Auswahl der wenigstens einen Gegenmaßnahme in Abhängigkeit von der ermittelten Müdigkeitsklasse kann ebenfalls mittels der elektronischen Recheneinrichtung erfolgen. Die Zuordnungsvorschrift kann beispielsweise in einer Speichereinrichtung hinterlegt sein, auf welche die elektronische Recheneinrichtung zugreifen kann. In der Zuordnungsvorschrift sind sämtliche vorgegebenen Müdigkeitsklassen hinterlegt, wobei jeder der vorgegebenen Müdigkeitsklassen wenigstens eine Gegenmaßnahme zugeordnet ist. Die jeweiligen Gegenmaßnahmen haben den Zweck, eine Müdigkeit des Fahrers des Kraftfahrzeugs zu bekämpfen, sodass der Fahrer weniger müde ist, beziehungsweise erst zu einem späteren Zeitpunkt müde ist, beziehungsweise weniger schnell ermüdet. Bei dem Verfahren ist es weiterhin vorgesehen, dass die wenigstens eine ausgewählte Gegenmaßnahme ausgelöst wird. Dieses Auslösen der Gegenmaßnahme kann beispielsweise mittels der elektronischen Recheneinrichtung erfolgen. Das Auslösen der Gegenmaßnahme, welche der ermittelten Müdigkeitsklasse des Fahrers zugeordnet ist, ermöglicht, dass die Gegenmaßnahme besonders gut auf die ermittelte Müdigkeit des Fahrers angepasst ist, wodurch die Müdigkeit des Fahrers besonders gut bekämpft werden kann. Die Müdigkeitsklasse kann beispielsweise einen Grad der Müdigkeit des Fahrers charakterisieren. Somit können über die Müdigkeitsklassen besonders einfach für jeweilige unterschiedliche Müdigkeitsgrade unterschiedliche Gegenmaßnahmen vorgesehen sein. Hierdurch ist eine besonders effiziente Bekämpfung der Müdigkeit des Fahrers möglich. Wird beispielsweise anhand der Müdigkeitsklasse festgestellt, dass der Fahrer sehr müde ist, dann wird über die Zuordnungsvorschrift eine Gegenmaßnahme ausgewählt, welche einen sehr starken Effekt auf die Müdigkeit des Fahrers hat und somit der Müdigkeit des Fahrers sehr stark entgegenwirkt.

Wird festgestellt, dass der Fahrer nur leicht müde ist, dann kann über die Zuordnungsvorschrift eine Gegenmaßnahme ausgewählt werden, welche lediglich einen leichten Einfluss auf die Müdigkeitsentwicklung des Fahrers aufweist, jedoch beispielsweise lediglich einen besonders geringen Einfluss auf ein Fahrerlebnis des Fahrers hat. Das Verfahren ermöglicht somit, dass die ausgewählte Gegenmaßnahme besonders gut auf die ermittelte Müdigkeit des Fahrers abgestimmt ist und ein Fahrerlebnis des Fahrers besonders wenig beziehungsweise nicht mehr als notwendig beeinträchtigt wird.

In einer möglichen Weiterbildung der Erfindung ist es vorgesehen, dass die Müdigkeitsklasse anhand wenigstens eines der im Folgenden genannten Bewertungskriterien ermittelt wird. Als Bewertungskriterium kann ein Sensorwert einer Sensoreinrichtung vorgegeben sein, wobei der Sensorwert insbesondere einen CO₂-Gehalt und/oder einen Oz-Gehalt in der Luft im Kraftfahrzeug repräsentiert. Der O₂-Gehalt beschreibt einen Sauerstoffgehalt und der CO₂-Gehalt beschreibt einen Kohlenstoffdioxidgehalt. Das bedeutet, dass die Müdigkeitsklasse anhand des Kohlenstoffdioxidgehalts und/oder Sauerstoffgehalts in der Luft im Kraftfahrzeug ermittelt wird. Je niedriger ein O₂-Gehalt in der Luft im Kraftfahrzeug ist, beziehungsweise je höher ein CO₂-Gehalt in der Luft im Kraftfahrzeug ist, desto müder wird der Fahrer des Kraftfahrzeugs eingeschätzt. Das bedeutet, dass für den Fahrer des Kraftfahrzeugs eine Müdigkeitsklasse festgestellt wird, welche infolge des ermittelten CO₂-Gehalts beziehungsweise des ermittelten O₂-Gehalts in der Luft im Kraftfahrzeug ermittelt wird. Jeder Müdigkeitsklasse kann somit ein Bereich eines CO₂-Gehalts beziehungsweise eines O₂-Gehalts beziehungsweise einer Kombination des O₂-Gehalts mit dem CO₂-Gehalt zugeordnet sein. Über den jeweiligen Bereich, in welchem der ermittelte O₂-Gehalt beziehungsweise der ermittelte CO₂-Gehalt liegt, wird somit die Müdigkeitsklasse des Fahrers ermittelt. Alternativ oder zusätzlich kann als Bewertungskriterium eine Lenkradbetätigung durch den Fahrer des Kraftfahrzeugs untersucht werden. Jeweiligen unterschiedlichen Bewegungsgeschwindigkeiten des Lenkrads beziehungsweise Lenkhäufigkeiten am Lenkrad beziehungsweise auf das Lenkrad des Kraftfahrzeugs aufgebrachten Lenkmomenten sind unterschiedliche Müdigkeitsklassen des Fahrers zugeordnet. Weiterhin alternativ oder zusätzlich kann als Bewertungskriterium die Nutzung eines Gas- oder Bremspedals herangezogen werden. Hierbei kann die Nutzung des Gas- oder Bremspedals charakterisieren, wie oft das Gas- beziehungsweise Bremspedal genutzt wird, beziehungsweise wie stark das Gas- beziehungsweise Bremspedal betätigt wird und somit welche Kraft auf das Gaspedal beziehungsweise das Bremspedal aufgebracht wird, beziehungsweise wie weit das Gaspedal beziehungsweise das Bremspedal verstellt wird, beziehungsweise wie schnell das Gaspedal beziehungsweise das Bremspedal verstellt wird. Als Bewertungskriterium kann weiterhin alternativ oder zusätzlich ein Vorkommen von als kritisch eingestuften Fahrmanövern zum Ermitteln der Müdigkeitsklasse des Fahrers herangezogen werden. Hierbei kann insbesondere ermittelt werden, wie oft jeweilige als kritisch eingestufte Fahrmanöver innerhalb eines vorgegebenen Zeitintervalls auftreten, und in Abhängigkeit von der ermittelten auftretenden Häufigkeit die Müdigkeitsklasse des Fahrers ermittelt werden. Alternativ oder zusätzlich können unterschiedliche Kritikalitätsstufen für unterschiedliche Fahrmanöver vorgegeben sein, wobei die Müdigkeitsklasse des Fahrers in Abhängigkeit von einer Häufigkeit des Vorkommens von Fahrmanövern jeweiliger Kritikalität ermittelt wird. Je häufiger ein als kritisch eingestuftes Fahrmanöver auftritt, desto höher ist die durch die ausgewählte Müdigkeitsklasse repräsentierte ermittelte Müdigkeit des Fahrers. Weiterhin alternativ oder zusätzlich kann als Bewertungskriterium ein Öffnungsgrad der Augen des Fahrers herangezogen werden. Das bedeutet, dass mittels einer Fahrerüberwachungskamera die Augen des Fahrers hinsichtlich deren Öffnungsgrad überwacht werden können. Je weiter die Augen des Fahrers geschlossen sind, desto größer ist der Müdigkeitsgrad, welcher durch die für den Fahrer ausgewählte Müdigkeitsklasse repräsentiert wird. Weiterhin alternativ oder zusätzlich kann als Bewertungskriterium eine körperliche Eigenschaft des Fahrers herangezogen werden. Als Bewertungskriterium kann beispielsweise eine Größe oder ein Gewicht des Fahrers als Bewertungskriterium ausgewählt werden. Anhand dieser körperlichen Eigenschaften des Fahrers kann beispielsweise im Zusammenhang mit dem ermittelten Sensorwert der Sensoreinrichtung, beispielsweise dem ermittelten COz-Gehalt und/oder dem ermittelten O₂-Gehalt in der Luft im Kraftfahrzeug die Müdigkeitsklasse des Fahrers ermittelt werden. Beispielsweise kann sich ein geringer Sauerstoffgehalt später auf die Müdigkeit eines Fahrers auswirken, welcher groß und/oder schwer ist im Vergleich zu einem Fahrer, welcher klein und/oder leicht ist. Alternativ oder zusätzlich kann als Bewertungskriterium eine Fahrerfahrung des Fahrers herangezogen werden. Das bedeutet, dass ein Fahrer mit einer höheren Fahrerfahrung langsamer ermüdet als ein Fahrer mit einer geringen Fahrerfahrung. Somit kann anhand der ermittelten Fahrerfahrung des Fahrers besonders zuverlässig fahrerindividuell die Müdigkeitsklasse einer aktuellen Müdigkeit des Fahrers ermittelt werden. Die Müdigkeitsklasse kann in Abhängigkeit von jeweiligen aktuellen Werten der jeweiligen Bewertungskriterien beziehungsweise aktuellen Zuständen der jeweiligen Bewertungskriterien ermittelt werden. Alternativ oder zusätzlich kann die Müdigkeitsklasse in Abhängigkeit von einem zeitlichen Verlauf jeweiliger Werte beziehungsweise jeweiliger Zustände des wenigstens einen Bewertungskriteriums ermittelt werden. Hierdurch kann die eine Müdigkeit des Fahrers charakterisierende Müdigkeitsklasse mit besonders großer Zuverlässigkeit richtig ermittelt werden.

Die Erfindung betrifft des Weiteren ein zweites Verfahren zur Müdigkeitsbekämpfung eines Fahrers eines Kraftfahrzeugs, bei welchem eine Berechnungsvorschrift herangezogen wird, mittels welcher anhand eines Parametersatzes eine Müdigkeitsverlaufskurve erstellt werden kann, welche eine Müdigkeitsentwicklung des Fahrers über die Zeit repräsentiert. Diese Berechnungsvorschrift kann beispielsweise in einer Speichereinrichtung hinterlegt und somit gespeichert sein. Die Müdigkeitsverlaufskurve beschreibt somit, wie sich ein Müdigkeitsgrad des Fahrers über die Zeit in der Zukunft voraussichtlich entwickeln wird. Bei dem Verfahren ist es weiterhin vorgesehen, dass konkrete Werte für den Parametersatz für eine vorausliegende Fahrtstrecke ermittelt werden. Der Parametersatz umfasst wenigstens einen Parameter, insbesondere mehrere Parameter. Bei dem Verfahren wird wenigstens ein Wert für den wenigstens einen Parameter des Parametersatzes für die vorausliegende Fahrtstrecke ermittelt. Die vorausliegende Fahrtstrecke kann beispielsweise bei einer aktivierten Routenführung anhand von Routendaten ermittelt werden, welche von einer Navigationseinrichtung zur Verfügung gestellt werden können. Die Parameter des Parametersatzes beschreiben Einflussgrößen auf die Müdigkeitsentwicklung des Fahrers. Das bedeutet, dass je nach Wert des jeweiligen Parameters die Müdigkeitsentwicklung des Fahrers unterschiedlich beeinflusst wird.

Bei dem Verfahren ist es weiterhin vorgesehen, dass anhand der Berechnungsvorschrift unter Verwendung der ermittelten Werte für den Parametersatz die Müdigkeitsverlaufskurve für die vorausliegende Fahrtstrecke ermittelt wird. Mit anderen Worten werden die ermittelten Werte des Parametersatzes in der Berechnungsvorschrift eingesetzt und somit über die Berechnungsvorschrift die Müdigkeitsverlaufskurve für die vorausliegende Fahrtstrecke ermittelt, welche beschreibt, wie sich die Müdigkeitsentwicklung des Fahrers voraussichtlich über die vorausliegende Fahrtstrecke entwickelt. Weiterhin ist bei dem Verfahren vorgesehen, dass die Müdigkeitsverlaufskurve analysiert wird. Insbesondere kann die Müdigkeitsverlaufskurve dahingehend analysiert werden, ob der Verlauf dieser Müdigkeitsverlaufskurve wenigstens einem vorgegebenen Kriterium entspricht. In Abhängigkeit von einem Ergebnis der Analyse und somit in Abhängigkeit davon, ob im Rahmen der Analyse festgestellt worden ist, dass die Müdigkeitsverlaufskurve dem wenigstens einen Kriterium entspricht oder nicht entspricht, wird eine Gegenmaßnahme ausgelöst, durch welche wenigstens ein Wert eines veränderbaren Parameters des Parametersatzes gezielt verändert wird. Hierbei hat die Gegenmaßnahme den Zweck, eine Müdigkeit des Fahrers zu bekämpfen, sodass der Fahrer wieder wacher wird, und/oder dafür zu sorgen, dass der Fahrer später als zu einem durch die Müdigkeitsverlaufskurve vorgegebenen Zeitpunkt einen vorgegebenen Müdigkeitsgrad erreicht und somit später müde wird, und/oder dafür zu sorgen, dass der Fahrer weniger schnell ermüdet. Die Gegenmaßnahme ist somit dazu vorgesehen, den wenigstens einen Parameter des Parametersatzes derart anzupassen, dass die Müdigkeit des Fahrers bekämpft werden kann und somit der Müdigkeit des Fahrers entgegengewirkt wird. Insbesondere kann die Gegenmaßnahme in Abhängigkeit davon gewählt werden, welcher Parameter des Parametersatzes beziehungsweise wie stark der wenigstens eine veränderbare Parameter des Parametersatzes durch Einsatz der Gegenmaßnahme verändert wird. Durch Einsatz der Gegenmaßnahme wird somit der wenigstens eine Wert des wenigstens einen veränderbaren Parameters des Parametersatzes geändert und infolgedessen der Verlauf der Müdigkeitsverlaufskurve angepasst. Hierbei kann durch den Einsatz der Gegenmaßnahme die Müdigkeitsverlaufskurve in der Höhe gestaucht und/oder in der Länge gestreckt werden. Die Gegenmaßnahme kann insbesondere dann ausgelöst werden, wenn im Rahmen der Analyse der Müdigkeitsverlaufskurve festgestellt wird, dass der Müdigkeitsgrad des Fahrers auf der vorausliegenden Fahrtstrecke einen vorgegebenen oberen Schwellenwert überschreitet. Bei der Analyse wird somit untersucht, ob der Verlauf der Müdigkeitsverlaufskurve gefällt oder nicht gefällt. Wird festgestellt, dass der Verlauf der Müdigkeitsverlaufskurve nicht gefällt, dann wird der wenigstens eine veränderbare Parameter herangezogen und der Wert dieses Parameters angepasst.

Das Ermitteln der Müdigkeitsverlaufskurve mittels der Berechnungsvorschrift und/oder das Analysieren der Müdigkeitsverlaufskurve können insbesondere mittels einer elektronischen Recheneinrichtung erfolgen. Das Anpassen des wenigstens einen Werts des wenigstens einen veränderbaren Parameters des Parametersatzes kann durch eine Steuereinrichtung ausgelöst werden. Die konkreten Werte für den Parametersatz für die vorausliegende Fahrtstrecke können mittels einer Erfassungseinrichtung ermittelt und für die elektronische Recheneinrichtung bereitgestellt werden.

In einer möglichen Weiterbildung der Erfindung ist es vorgesehen, dass eine Warnung im Kraftfahrzeug ausgegeben wird, wenn bei der Analyse festgestellt wird, dass zu einem vorgegebenen zukünftigen Zeitpunkt der Müdigkeitsgrad des Fahrers einen vorgegebenen Schwellenwert für diesen Zeitpunkt überschreitet. Die Warnung kann in dem Kraftfahrzeug optisch und/oder akustisch und/oder haptisch ausgegeben werden. Über die Warnung kann somit der Fahrer darüber informiert werden, dass zu dem vorgegebenen zukünftigen Zeitpunkt der Müdigkeitsgrad des Fahrers voraussichtlich den vorgegebenen Schwellenwert überschreitet und somit der Fahrer zu diesem zukünftigen Zeitpunkt voraussichtlich zu müde ist. Infolge des Wahrnehmens der Warnung kann der Fahrer selbst Maßnahmen ergreifen, welche seine Müdigkeit bekämpfen. Beispielsweise kann der Fahrer infolge der Wahrnehmung der Warnung eine Pause einlegen. Der Fahrer kann somit rechtzeitig anfangen, eine aufkommende Müdigkeit zu bekämpfen und nicht erst dann, wenn der Fahrer bereits zu müde zum sicheren Steuern des Kraftfahrzeugs ist. Der Fahrer kann somit frühzeitig eine aufkommende Müdigkeit bekämpfen. Hierdurch wird ein sicheres und aufmerksames Steuern des Kraftfahrzeugs durch den Fahrer ermöglicht.

In einer weiteren möglichen Ausgestaltung der Erfindung ist es vorgesehen, dass der Schwellenwert spezifisch für einen Fahrtabschnitt der vorausliegenden Fahrtstrecke ist, in welchem sich das Kraftfahrzeug zu dem vorgegebenen Zeitpunkt befindet. Das bedeutet, dass für unterschiedliche Fahrtabschnitte der vorausliegenden Fahrtstrecke zueinander unterschiedliche Schwellenwerte vorgegeben sein können. Infolgedessen wird die Warnung im Kraftfahrzeug jeweils dann ausgegeben, wenn ermittelt wird, dass der Müdigkeitsgrad des Fahrers bei einer Ankunft des Fahrers in dem jeweiligen Fahrtabschnitt den für diesen Fahrtabschnitt spezifischen Schwellenwert überschreitet. Beispielsweise kann einer der Fahrtabschnitte ein Bereich entlang der vorausliegenden Fahrtstrecke sein, in welchem eine erhöhte Konzentration des Fahrers erforderlich ist, wie beispielsweise eine Landstraße mit engen Serpentinen. Für unterschiedlich anstrengende Fahrtabschnitte der Fahrtroute können somit je nach voraussichtlicher Forderung des Fahrers unterschiedliche Schwellenwerte vorgegeben sein. Bei dem Verfahren wird somit ermittelt, zu welchem Zeitpunkt der Fahrer in den jeweiligen Fahrtabschnitten ist und welchen Müdigkeitsgrad der Fahrer zu diesen jeweiligen Zeitpunkten aufweisen wird. Dieser ermittelte Müdigkeitsgrad für den jeweiligen Zeitpunkt wird mit dem zugeordneten Schwellenwert des jeweiligen Fahrtabschnitts verglichen. Sind sämtliche ermittelten Müdigkeitsgrade unter den den jeweiligen Fahrtabschnitten zugeordneten Schwellenwerten, dann erfolgt keine Einleitung einer Gegenmaßnahme. Liegt jedoch zumindest ein ermittelter Müdigkeitsgrad des Fahrers oberhalb des dem zugeordneten Fahrtabschnitt zugeordneten Schwellenwerts, dann wird wenigstens eine Gegenmaßnahme ausgelöst. Hierdurch wird ein sicheres Steuern des Kraftfahrzeugs durch den Fahrer entlang der vorausliegenden Fahrtstrecke ermöglicht, insbesondere wenn in unterschiedlichen Fahrtabschnitten der Fahrer unterschiedlich stark beim Steuern des Kraftfahrzeugs gefordert wird und sich somit unterschiedlich stark konzentrieren muss.

In einer weiteren möglichen Ausgestaltung der Erfindung ist es vorgesehen, dass für einen vorgegebenen Prüfzeitpunkt anhand der Müdigkeitsverlaufskurve ein Müdigkeitsgrad des Fahrers prädiziert wird, der prädizierte Müdigkeitsgrad mit einem für diesen Prüfzeitpunkt anhand von Sensordaten ermittelten Müdigkeitsgrad des Fahrers verglichen wird und die Berechnungsvorschrift in Abhängigkeit von einem Ergebnis des Vergleichs angepasst wird. Das bedeutet, dass die Müdigkeitsverlaufskurve ermittelt wird und anhand der Müdigkeitsverlaufskurve für den vorgegebenen Prüfzeitpunkt der voraussichtliche Müdigkeitsgrad des Fahrers des Kraftfahrzeugs geschätzt wird. Ist der Prüfzeitpunkt erreicht, dann wird anhand von Sensorwerten für diesen Prüfzeitpunkt ermittelt, welchen tatsächlichen Müdigkeitsgrad der Fahrer des Kraftfahrzeugs zu dem Prüfzeitpunkt aufweist. Anschließend wird verglichen, wie weit der geschätzte und somit prädizierte Müdigkeitsgrad von dem anhand der Sensordaten ermittelten und somit tatsächlichen Müdigkeitsgrad des Fahrers des Kraftfahrzeugs abweicht. Ist diese Abweichung größer als ein vorgegebener Grenzwert, dann wird die Berechnungsvorschrift angepasst, um einen gegebenenfalls vorliegenden systematischen Fehler der Berechnungsvorschrift zu beseitigen. Ist die Abweichung zwischen dem prädizierten Müdigkeitsgrad und dem anhand der Sensordaten ermittelten tatsächlichen Müdigkeitsgrad des Fahrers kleiner oder gleich dem vorgegebenen Grenzwert, dann bleibt die Berechnungsvorschrift unverändert. Der Grenzwert kann somit einen Toleranzbereich für die Abweichung des anhand der mittels der Berechnungsvorschrift ermittelten Müdigkeitsverlaufskurve geschätzten Müdigkeitsgrads zu dem anhand der Sensordaten ermittelten tatsächlichen Müdigkeitsgrad beschreiben. Durch diesen Vergleich kann somit eine Überprüfung der Berechnungsvorschrift erfolgen.

In einer weiteren möglichen Ausgestaltung der Erfindung ist es vorgesehen, dass der Parametersatz einen Wert wenigstens eines der im Folgenden genannten Parameter umfasst. Als Parameter kann eine Anzahl an Fahrzeuginsassen herangezogen werden. Je mehr Fahrzeuginsassen im Kraftfahrzeug sind, desto schneller kann ein vorhandener Oz-Gehalt in der Luft im Kraftfahrzeug abnehmen beziehungsweise desto schneller kann ein CO₂-Gehalt in der Luft im Kraftfahrzeug ansteigen. Weiterhin kann eine erhöhte Anzahl an Fahrzeuginsassen im Kraftfahrzeug durch Ablenkung des Fahrers dafür sorgen, dass der Fahrer schnell ermüdet. Alternativ kann bei einer besonders geringen Anzahl an Fahrzeuginsassen der Fahrer aufgrund von Langeweile besonders schnell ermüden. Alternativ oder zusätzlich kann als Parameter eine Innenraumtemperatur des Kraftfahrzeugs herangezogen werden. Je wärme es im Innenraum des Kraftfahrzeugs ist, desto schneller ermüdet der Fahrer des Kraftfahrzeugs. Alternativ oder zusätzlich kann als Parameter eine Eigenschaft des Fahrers, insbesondere eine Größe und/oder ein Gewicht und/oder Fahrerfahrungslevel herangezogen werden. Je mehr Fahrerfahrung ein Fahrer mitbringt, desto weniger anstrengend ist das Steuern des Kraftfahrzeugs für diesen Fahrer und desto langsamer ermüdet der Fahrer beim Steuern des Kraftfahrzeugs. Weiterhin kann über die Größe und das Gewicht des Fahrers in Kombination auf eine Fitness des Fahrers geschlossen werden. Beispielsweise kann angenommen werden, dass je fitter der Fahrer des Kraftfahrzeugs ist, desto weniger schnell ermüdet der Fahrer des Kraftfahrzeugs beim Steuern des Kraftfahrzeugs. Je unfitter der Fahrer des Kraftfahrzeugs eingeschätzt wird, desto schneller ermüdet der Fahrer des Kraftfahrzeugs voraussichtlich beim Steuern des Kraftfahrzeugs.

Als Parameter kann weiterhin alternativ oder zusätzlich eine Anzahl und Dauer an eingelegten Pausen herangezogen werden. Je häufiger ein Fahrer beim Steuern des Kraftfahrzeugs Pausen einlegt beziehungsweise je länger jeweilige eingelegte Pausen sind, desto langsamer ermüdet der Fahrer des Kraftfahrzeugs beim Steuern des Kraftfahrzeugs, da durch die jeweiligen Pausen der Müdigkeit des Fahrers entgegengewirkt wird. Weiterhin alternativ oder zusätzlich kann als Parameter eine Tageszeit herangezogen werden. Beispielsweise kann ermittelt werden, dass, je später der Zeitpunkt an einem Tag ist, desto schneller ermüdet der Fahrer des Kraftfahrzeugs voraussichtlich aufgrund einer Anzahl an Stunden, welche der Fahrer bereits wach verbracht hat. Weiterhin alternativ oder zusätzlich kann als Parameter das Wetter mit in die Berechnungsvorschrift einbezogen werden. Hierbei kann für den Parameter des Wetters beispielsweise betrachtet werden, wie schwierig jeweilige Straßenverhältnisse aufgrund des Wetters sind. Je schwieriger die jeweiligen Straßenverhältnisse aufgrund des Wetters festgestellt werden, desto schneller ermüdet der Fahrer des Kraftfahrzeugs voraussichtlich beim Steuern des Kraftfahrzeugs entlang der Fahrtstrecke. Weiterhin alternativ oder zusätzlich kann als Parameter eine Mediennutzung im Kraftfahrzeug herangezogen werden. Wird festgestellt, dass im Kraftfahrzeug die Konzentration des Fahrers stark beanspruchende Medien konsumiert werden, dann wird ermittelt, dass der Fahrer voraussichtlich besonders schnell ermüdet. Alternativ oder zusätzlich kann als Parameter eine Eigenschaft der vorausliegenden Fahrtstrecke herangezogen werden. Hierbei kann die Eigenschaft der vorausliegenden Fahrtstrecke charakterisieren, wie viel Konzentration das Steuern des Kraftfahrzeugs auf der vorausliegenden Fahrtstrecke von dem Fahrer erfordert. Je anstrengender das Steuern des Kraftfahrzeugs auf der vorausliegenden Fahrtstrecke ist, desto schneller ermüdet der Fahrer. Insbesondere bei der Innenraumtemperatur des Kraftfahrzeugs, der Anzahl und Dauer eingelegter Pausen sowie der Mediennutzung im Kraftfahrzeug handelt es sich um veränderbare Parameter des Parametersatzes. Je mehr der genannten Parameter als Bestandteile des Parametersatzes für das Ermitteln der Müdigkeitsverlaufskurve anhand der Berechnungsvorschrift herangezogen werden, desto präziser und zuverlässiger kann die Müdigkeitsverlaufskurve für den Fahrer ermittelt werden.

In einer weiteren möglichen Ausgestaltung der Erfindung ist es vorgesehen, dass die Müdigkeitsverlaufskurve fahrerspezifisch ermittelt wird. Das bedeutet, dass wenigstens eine Eigenschaft des Fahrers ein zwingender Parameter des Parametersatzes ist. Die Eigenschaft des Fahrers kann eine Größe, ein Gewicht, eine Fahrerfahrung, ein Gesundheitszustand, ein Gemütszustand, eine Startmüdigkeit oder eine Tagesform sein. Für unterschiedliche Fahrer des Kraftfahrzeugs werden somit unterschiedliche Müdigkeitsverlaufskurven anhand der Berechnungsvorschrift ermittelt. Es kann somit im Rahmen des Verfahrens fahrerindividuell die Müdigkeit des jeweiligen Fahrers bekämpft werden. Insbesondere kann nicht nur die Müdigkeitsverlaufskurve fahrerindividuell ermittelt werden, sondern zusätzlich die Gegenmaßnahme fahrerindividuell ausgewählt werden. Das bedeutet, dass diejenige Gegenmaßnahme aus mehreren Gegenmaßnahmen ausgewählt wird, welche am besten auf die ermittelte Müdigkeitsverlaufskurve des Fahrers einwirkt, insbesondere die Müdigkeitsentwicklung des Fahrers am stärksten beziehungsweise am zuverlässigsten bekämpft. Es kann somit fahrerindividuell diejenige Gegenmaßnahme ausgewählt werden, welche bei der Müdigkeitsbekämpfung des Fahrers voraussichtlich den größten Effekt erzielt. Durch das fahrerspezifische Ermitteln der Müdigkeitsverlaufskurve kann die Müdigkeitsentwicklung des Fahrers besonders zuverlässig vorhergesagt werden.

In einer weiteren möglichen Ausgestaltung der Erfindung ist es vorgesehen, dass als Gegenmaßnahme wenigstens eine der im Folgenden genannten Aktionen durchgeführt wird. Als Gegenmaßnahme kann zum einen ein Anteil an Frischluft im Kraftfahrzeug erhöht werden. Das bedeutet, dass eine Frischluftzufuhr aus einer Umgebung des Kraftfahrzeugs in den Innenraum des Kraftfahrzeugs erhöht wird. Alternativ oder zusätzlich kann als Gegenmaßnahme ein aktivierter Umluftbetrieb deaktiviert werden. Das bedeutet, dass, sofern der Umluftbetrieb aktiviert ist, diese deaktiviert wird und somit Frischluft von außerhalb des Kraftfahrzeugs dem Innenraum des Kraftfahrzeugs zugeführt wird. Alternativ oder zusätzlich kann als Gegenmaßnahme eine Umwälzgeschwindigkeit von Luft im Kraftfahrzeug erhöht werden. Hierdurch kann eine besonders schnelle Durchmischung und infolgedessen eine besonders gleichmäßige Verteilung von Sauerstoff sowie von Kohlenstoffdioxid im Innenraum des Kraftfahrzeugs erreicht werden. Bereiche mit lokal erniedrigter Sauerstoffkonzentration beziehungsweise lokal erhöhter Kohlenstoffdioxidkonzentration können somit besonders sicher vermieden werden. Alternativ oder zusätzlich kann als Gegenmaßnahme wenigstens ein Fenster des Kraftfahrzeugs geöffnet werden. Durch das Öffnen des Fensters des Kraftfahrzeugs kann besonders schnell besonders viel Frischluft in den Innenraum des Kraftfahrzeugs gefördert werden, wodurch ein Sauerstoffgehalt der Luft im Innenraum des Kraftfahrzeugs besonders schnell erhöht und ein Kohlenstoffdioxidgehalt besonders schnell gesenkt werden kann. Alternativ oder zusätzlich kann als Gegenmaßnahme eine Warnung für den Fahrer im Kraftfahrzeug ausgegeben werden. Diese Warnung kann akustisch und/oder optisch und/oder haptisch ausgegeben werden. Über die Warnung kann der Fahrer auf eine negative Müdigkeitsentwicklung hingewiesen werden, wodurch der Fahrer Maßnahmen zur Müdigkeitsbekämpfung selbst einleiten kann. Beispielsweise kann der Fahrer zur Bekämpfung der Müdigkeit wenigstens eine Pause einlegen. Weiterhin alternativ oder zusätzlich kann als Gegenmaßnahme ein Lautstärkepegel von Audioausgaben im Kraftfahrzeug erhöht werden. Durch das Erhöhen des Lautstärkepegels der Audioausgabe im Kraftfahrzeug kann der Fahrer des Kraftfahrzeugs aufgeweckt und hierdurch eine Müdigkeit des Fahrers bekämpft werden. Weiterhin alternativ oder zusätzlich kann es als Gegenmaßnahme vorgesehen sein, dass ein Blaulichtanteil wenigstens eines Bildschirms im Kraftfahrzeug erhöht wird. Durch die Erhöhung des Blaulichtanteils des Displays kann eine Bildung des Schlafhormons Melatonin gehemmt werden, wodurch ein Ermüden des Fahrers bekämpft werden kann. Weiterhin alternativ oder zusätzlich kann als Gegenmaßnahme vorgesehen sein, dass der Fahrer mittels reversibler Gurtstraffer gerüttelt wird. Diese reversiblen Gurtstraffer können somit als Gegenmaßnahme in kurzen Abständen alternierend gelockert und angezogen werden, wodurch ein Rütteln des Fahrers resultiert. Durch dieses Rütteln des Fahrers kann der Fahrer wachgerüttelt werden, wodurch die Müdigkeit des Fahrers bekämpft wird. Als Gegenmaßnahme kann es weiterhin alternativ oder zusätzlich vorgesehen sein, dass wenigstens ein Zwischenstopp durch Änderung einer Navigationsroute eingeplant wird. Das bedeutet, dass mittels einer Navigationseinrichtung bei aktivierter Routenführung die Navigationsroute derart angepasst werden kann, dass wenigstens ein zusätzlicher Zwischenstopp entlang der vorausliegenden Fahrtstrecke eingeplant wird. Bei diesem Zwischenstopp kann sich der Fahrer vom Steuern des Kraftfahrzeugs erholen, wodurch einer stärker werdenden Müdigkeit des Fahrers entgegengewirkt werden kann. Weiterhin alternativ oder zusätzlich kann als Gegenmaßnahme eine Ladestrategie des Kraftfahrzeugs angepasst werden. Das bedeutet, dass in Abhängigkeit von der ermittelten Müdigkeitsverlaufskurve ein früherer Ladestopp für das Kraftfahrzeug eingeplant werden kann und/oder häufigere Ladestopps für das Kraftfahrzeug eingeplant werden können, damit der Fahrer sich während dieser Ladestopps erholen kann und somit die Müdigkeit des Fahrers bekämpft wird. Es kann wenigstens eine der genannten Gegenmaßnahmen, insbesondere können mehrere der genannten Gegenmaßnahmen, ausgelöst werden, um die Müdigkeitsverlaufskurve zu beeinflussen und somit die Müdigkeit des Fahrers besonders gut bekämpfen zu können.

Die Erfindung betrifft des Weiteren eine elektronische Recheneinrichtung, welche dazu eingerichtet ist, wenigstens eines der erfindungsgemäßen Verfahren durchzuführen. Das bedeutet, dass die elektronische Recheneinrichtung dazu eingerichtet ist, anhand wenigstens eines Bewertungskriteriums eine Müdigkeitsklasse zu ermitteln und über die Zuordnungsvorschrift die wenigstens eine Gegenmaßnahme für die ermittelte Müdigkeitsklasse auszuwählen sowie die wenigstens eine ausgewählte Gegenmaßnahme auszulösen. Alternativ oder zusätzlich ist die elektronische Recheneinrichtung dazu eingerichtet, die Berechnungsvorschrift heranzuziehen, die konkreten Werte für den Parametersatz für die vorausliegende Fahrtstrecke zu ermitteln, mittels der Berechnungsvorschrift unter Verwendung der ermittelten Werte für den Parametersatz die Müdigkeitsverlaufskurve für die vorausliegende Fahrtstrecke zu ermitteln, die Müdigkeitsverlaufskurve zu analysieren und in Abhängigkeit von einem Ergebnis der Analyse die wenigstens eine Gegenmaßnahme auszulösen. Vorteile und vorteilhafte Weiterbildungen der erfindungsgemäßen Verfahren sind als Vorteile und vorteilhafte Weiterbildungen der erfindungsgemäßen Recheneinrichtung anzusehen.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ein Verfahrensschema für ein erstes Verfahren zur Müdigkeitsbekämpfung eines Fahrers eines Kraftfahrzeugs;
- Fig. 2: ein Verfahrensschema für ein zweites Verfahren zur Müdigkeitsbekämpfung eines Fahrers eines Kraftfahrzeugs; und
- Fig. 3: eine Müdigkeitsverlaufskurve, welche einen Verlauf eines Müdigkeitsgrads des Fahrers des Kraftfahrzeugs über die Zeit charakterisiert.

Gleiche oder funktionsgleiche Elemente sind in den Figuren mit den gleichen Bezugszeichen versehen.

Während des Steuerns eines Kraftfahrzeugs kann ein Fahrer des Kraftfahrzeugs ermüden, was zu gefährlichen Situationen führen kann. Um diese gefährlichen Situationen so gut es geht zu vermeiden ist somit eine Müdigkeit des Fahrers zu bekämpfen. Hierzu sind vorliegend zwei Verfahren vorgesehen.

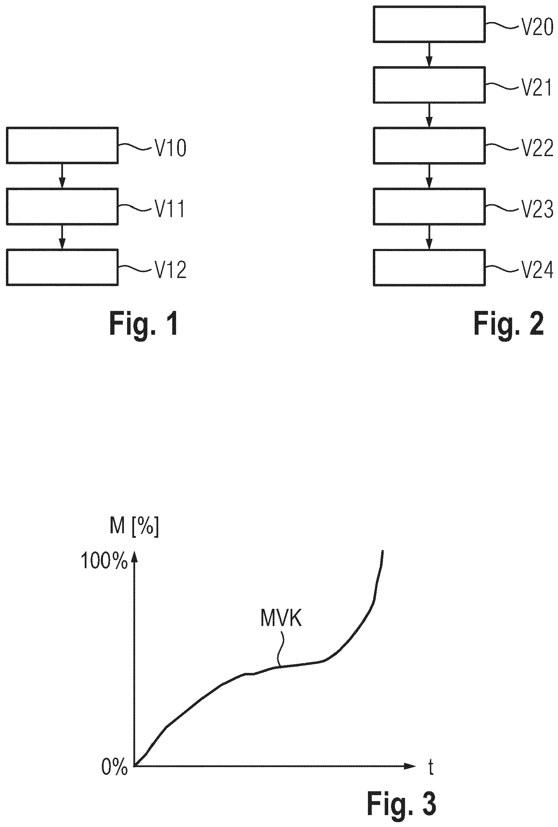

Bei dem ersten Verfahren zur Müdigkeitsbekämpfung des Fahrers des Kraftfahrzeugs, dessen Verfahrensschema in Fig. 1 gezeigt ist, ist es vorgesehen, dass in einem ersten Verfahrensschritt V10 anhand wenigstens eines Bewertungskriteriums eine Müdigkeitsklasse ermittelt wird, welche die Müdigkeit des Fahrers repräsentiert. Als Bewertungskriterium kann ein Sensorwert einer Sensoreinrichtung herangezogen werden. Hierbei kann der Sensorwert wenigstens einen CO₂-Gehalt und/oder einen O₂-Gehalt in der Luft im Kraftfahrzeug repräsentieren. Alternativ oder zusätzlich kann als Bewertungskriterium eine Lenkradbetätigung und/oder eine Nutzung eines Gas- oder Bremspedals und/oder ein Öffnungsgrad von Augen des Fahrers und/oder eine körperliche Eigenschaft des Fahrers und/oder eine Fahrerfahrung des Fahrers und/oder ein Vorkommen von als kritisch eingestuften Fahrmanövern herangezogen werden.

In einem zweiten Verfahrensschritt V11 des ersten Verfahrens ist es vorgesehen, dass über eine Zuordnungsvorschrift, in welcher unterschiedlichen Müdigkeitsklassen jeweilige Gegenmaßnahmen zugeordnet sind, wenigstens eine Gegenmaßnahme für die ermittelte Müdigkeitsklasse ausgewählt wird. Darüber hinaus ist es bei dem ersten Verfahren vorgesehen, dass in einem dritten Verfahrensschritt V12 die wenigstens eine ausgewählte Gegenmaßnahme ausgelöst wird. Bei dem ersten Verfahren kann somit ein Sauerstoff-/Kohlenstoffdioxidsensor in einer Klimaanlage des Kraftfahrzeugs genutzt werden, um anhand von ausgeatmeter Luft zu erkennen, wie müde Fahrzeuginsassen des Kraftfahrzeugs sind. Hierfür kann die Klimaanlage mit dem Sauerstoff-/Kohlenstoffdioxidsensor ausgestattet sein. Weiterhin kann das Kraftfahrzeug ein Steuergerät umfassen, welches sich im Bereich einer Schalttafel befinden kann, wobei das Steuergerät dazu eingerichtet ist, Verfahrensschritte des ersten Verfahrens durchzuführen und somit eine Müdigkeit des Fahrers des Kraftfahrzeugs zu erkennen und zu bekämpfen.

Bei dem ersten Verfahren wird die aktuelle Müdigkeit des Fahrers abgeschätzt. Dazu erhält das in dem Kraftfahrzeug angeordnete Steuergerät eine Vielzahl von Informationen über eine Sensorik im Kraftfahrzeug. Das Steuergerät kann beispielsweise Teil eines Infotainmentsystems und/oder eines Zentralrechners des Kraftfahrzeugs sein. Als Informationen kann das Steuergerät Daten einer Lenkradbetätigung empfangen, um ein Lenkverhalten nachzuvollziehen. Alternativ oder zusätzlich kann das Steuergerät über die Sensorik Daten einer Innenraumkamera über detektierte Augen des Fahrers inklusive Öffnungsgrad der Augen erhalten. Alternativ oder zusätzlich kann das Steuergerät Daten über eine Nutzung des Gas- und/oder Bremspedals erhalten. Weiterhin kann die Steuereinrichtung Daten von Fahrerassistenzsystemen des Kraftfahrzeugs in Form einer Statistik über als kritisch erfasste Fahrmanöver wie dichtes Auffahren oder Spurverlassen empfangen. Alternativ oder zusätzlich kann das Steuergerät Daten über den Fahrer, wie Größe, Gewicht und/oder Fahrerfahrung empfangen. Alternativ oder zusätzlich kann das Steuergerät Daten von einem Sauerstoff- oder Kohlenstoffdioxidsensor als Teil der Klimaanlage empfangen. Die Daten können als singuläre Werte und/oder als Werte im Zeitverlauf durch das Steuergerät verarbeitet werden.

Zur Verarbeitung dieser Daten können einer oder mehrere Klassifikatoren eingesetzt werden, die die Müdigkeit des Fahrers ermitteln und diese in eine von unterschiedlichen Müdigkeitsklassen einordnen. Als Klassifikatoren können Verfahren des maschinellen Lernens eingesetzt werden, wie neuronale Netze, Support Vector Machines, Random Forrests, Entscheidungsbäume oder Ansätze wie Fuzzy-Systeme. Diese Verfahren des maschinellen Lernens werden dazu anhand von Realfahrdaten der Bewertungskriterien inklusive eines Labeling der Müdigkeit des Fahrers trainiert. Hierbei können Ansätze wie Hauptkomponentenanalysen und ähnliches eingesetzt werden, um die Daten vorher zu filtern beziehungsweise um zu leichter verarbeitbaren Linearkombinationen zu gelangen.

Zur Müdigkeitsermittlung können der Sauerstoffgehalt beziehungsweise Kohlenstoffdioxidgehalt in der Luft innerhalb des Fahrzeugs direkt gemessen werden. Da diese Luft über ein internes Lüftungssystem und die Klimaanlage regelmäßig umgewälzt wird, kann ein Sauerstoffbeziehungsweise Kohlenstoffdioxidsensor in der Klimaanlage den Gehalt dieser Gase in der Innenraumluft bestimmen. Sinkt dabei der Sauerstoffanteil beziehungsweise steigt der Kohlenstoffdioxidanteil in einem gewissen Zeitraum über eine jeweilige gewisse Schwelle, so deutet dies auf eine vorliegende Müdigkeit beziehungsweise auf eine beginnende Müdigkeit des Fahrers hin, da das Gehirn nicht mehr mit genügend Sauerstoff versorgt werden kann und auch die Konzentration des Fahrers leidet. Im Ergebnis wird anhand des Sauerstoffanteils beziehungsweise des Kohlenstoffdioxidanteils in der Innenraumluft die Müdigkeitsklasse des Fahrers bestimmt.

Je nach Müdigkeitsklasse können unterschiedliche Gegenmaßnahmen eingeleitet werden, insbesondere durch das Kraftfahrzeug. Als Gegenmaßnahme kann ein Anteil an Außenluft im Kraftfahrzeug erhöht werden, um den Sauerstoffgehalt in der Innenraumluft zu erhöhen. Alternativ oder zusätzlich kann ein aktivierter Umluftbetrieb deaktiviert werden oder in einem Automatikmodus eine Lüftung hochgedreht und damit eine Umwälzgeschwindigkeit erhöht werden. Alternativ oder zusätzlich können Fenster des Kraftfahrzeugs geöffnet werden oder eine Luftmischung über die Klimaanlage verändert werden und gleichzeitig die Umwälzgeschwindigkeit erhöht werden. Weiterhin alternativ oder zusätzlich kann der Fahrer durch Ausgeben einer Warnung auf die Müdigkeit hingewiesen werden und/oder ein Lautstärkepegel eines Infotainmentsystems erhöht werden und/oder ein Blaulichtanteil von Displays im Kraftfahrzeug erhöht werden und/oder über reversible Gurtstraffer der Fahrer wachgerüttelt werden und/oder über eine Änderung einer Navigationsroute ein Zwischenstopp eingeplant werden.

In Fig. 2 ist ein Verfahrensschema für ein zweites Verfahren zur Müdigkeitsbekämpfung des Fahrers des Kraftfahrzeugs gezeigt. Das zweite Verfahren ermöglicht, die Müdigkeit des Fahrers für einen weiteren Zeitverlauf vorherzusagen, um somit schon früh zu erkennen, dass der Fahrer müde wird, bevor seine Konzentration nachlässt. Hierbei werden Navigationsdaten sowie zahlreiche weitere Umweltdaten sowie Fahrercharakteristika mit einbezogen, um eine besonders genaue Müdigkeitserkennung und -prognose zu ermöglichen. Durch die Vorhersage des Müdigkeitsverlaufs des Fahrers ergeben sich besonders viele Möglichkeiten, um der Müdigkeit sanft entgegenzuwirken und eine Fahrsicherheit zu steigern. Das zweite Verfahren ermöglicht, dass prädiktive Gegenmaßnahmen gegen die Müdigkeit eingeleitet werden können.

Hierfür ist es in einem ersten Verfahrensschritt V20 des zweiten Verfahrens vorgesehen, dass eine Berechnungsvorschrift herangezogen wird, mittels welcher anhand eines Parametersatzes eine Müdigkeitsverlaufskurve MVK erstellt werden kann, welche eine Müdigkeitsentwicklung des Fahrers über die Zeit repräsentiert. Weiterhin ist es vorgesehen, dass in einem zweiten Verfahrensschritt V21 konkrete Werte für den Parametersatz für eine vorausliegende Fahrtstrecke ermittelt werden. Überdies ist es in einem dritten Verfahrensschritt V22 vorgesehen, dass mittels der Berechnungsvorschrift unter Verwendung der ermittelten Werte für den Parametersatz die Müdigkeitsverlaufskurve MVK für die vorausliegende Fahrtstrecke ermittelt wird. Weiterhin wird in einem vierten Verfahrensschritt V23 die Müdigkeitsverlaufskurve MVK analysiert. Diese Müdigkeitsverlaufskurve MVK ist in Fig. 3 dargestellt. Hierbei beschreibt die Müdigkeitsverlaufskurve MVK eine Entwicklung des Müdigkeitsgrads M in Prozent über die Zeit t. In einem fünften Verfahrensschritt V24 des Verfahrens ist es vorgesehen, dass in Abhängigkeit von einem Ergebnis der Analyse eine Gegenmaßnahme ausgelöst wird, durch welche wenigstens ein Wert eines veränderbaren Parameters des Parametersatzes gezielt verändert wird.

Bei dem zweiten Verfahren ist es somit vorgesehen, dass nicht eine aktuelle, sondern eine zu erwartende Müdigkeit zu einem bestimmten Zeitpunkt vorausgesagt wird. Grundgedanke dabei ist, dass die Müdigkeit eine Funktion in Abhängigkeit von der Zeit ist, vorliegend die Müdigkeitsverlaufskurve MVK. Dies bedeutet, dass, wenn man lang genug wartet, jeder müde ist und einschlafen wird, wobei Schlaf einem Müdigkeitsgrad von 100 Prozent entspricht. Dieser Kurvenverlauf der Müdigkeitsverlaufskurve MVK kann beeinflusst werden, da etwa sehr fordernde Tätigkeiten den Fahrer schneller müde werden lassen, sodass die Müdigkeitsverlaufskurve MVK in ihrer Länge gestaucht wird oder durch ausreichende Luftzufuhr, Bewegung, Energiezunahme et cetera der Fahrer länger wach und aktiv sein kann, wodurch der Verlauf der Müdigkeitsverlaufskurve MVK in ihrer Länge gestreckt wird. Weiterhin ist diese Müdigkeitsverlaufskurve MVK personenindividuell. Bei dem zweiten Verfahren ist es vorgesehen, dass die Müdigkeitsverlaufskurve MVK fahrerspezifisch ermittelt wird. Es können Daten einer bisherigen Fahrt oder weiterer zurückliegender Fahrten berücksichtigt werden, um einen besonders präzisen fahrerspezifischen Müdigkeitsverlauf MVK bestimmen zu können.

Bei dem zweiten Verfahren wird mittels des Steuergeräts über eine Müdigkeitsprognose der Verlauf der Müdigkeitsverlaufskurve MVK vorhergesagt. Hierbei kann die Zeit t als kontinuierliche oder diskrete Größe angenommen werden, beispielsweise mit einer Betrachtung von Zeitpunkten mit einem Abstand von zehn Minuten. Der Müdigkeitsgrad M kann kontinuierlich oder diskret betrachtet werden. Hierbei kann beispielsweise eine Müdigkeitsklasse ein Intervall von Müdigkeitsgraden von 20 Prozentpunkten umfassen. Beispielsweise sind sämtliche Müdigkeitsgrade von 0 Prozent bis 20 Prozent einer ersten gemeinsamen Müdigkeitsklasse zugeordnet, sämtliche Müdigkeitsgrade von 20 Prozent bis 40 Prozent einer zweiten gemeinsamen Müdigkeitsklasse zugeordnet, sämtliche Müdigkeitsgrade von 40 bis 60 Prozent einer dritten gemeinsamen Müdigkeitsklasse zugeordnet, sämtliche Müdigkeitsgrade von 60 bis 80 Prozent einer vierten gemeinsamen Müdigkeitsklasse zugeordnet und sämtliche Müdigkeitsgrade von 80 bis 100 Prozent einer fünften gemeinsamen Müdigkeitsklasse zugeordnet.

Für die Ermittlung der Müdigkeitsklassen kann ein Regressionsverfahren wie klassische Polynomregression, Prioritized Grammar Enumeration oder künstliche neuronale Netze, und/oder Klassifikationsverfahren herangezogen werden, wie die bereits genannten Verfahren des maschinellen Lernens.

Das Steuergerät, welches mittels der Berechnungsvorschrift die Prognose durchführt, kann für das Ermitteln der Müdigkeitsverlaufskurve MVK eine Aussage über eine Anzahl an Personen im Kraftfahrzeug empfangen, wobei die Anzahl der Personen über eine Belegungssensorik von Sitzen des Kraftfahrzeugs ermittelt werden kann. Weiterhin kann das Steuergerät eine geplante oder vermutete Navigationsroute erhalten, insbesondere im Hinblick auf eine verbleibende Fahrtdauer und/oder Charakteristika der Fahrtstrecke. Diese Charakteristika der Fahrtstrecke können lange, monotone Autobahnetappen oder kurvenreiche, abwechslungsreiche Strecken und/oder anstehende Durchfahrten durch Industriegebiete oder landwirtschaftliche Regionen, in welchen eine Wahrscheinlichkeit der Aktivierung der Umluftfunktion steigt, und/oder anstehende Durchfahrten durch Tunnel, mit schlechter Frischluft, und/oder bevorstehende Höhenunterschiede und/oder bevorstehende Verkehrsstörungen oder komplizierte Fahrsituationen, die besonders viel Konzentration erfordern, beschreiben. Die bevorstehenden Höhenunterschiede sind für das Ermitteln der Müdigkeitsverlaufskurve MVK relevant, da, je höher sich das Kraftfahrzeug über Meereshöhe befindet, desto niedriger ist der Luftdruck und damit eine Sauerstoffversorgung. Weiterhin alternativ oder zusätzlich kann das Steuergerät eine eingestellte Innenraumtemperatur empfangen und/oder eine Anzahl eingelegter Pausen sowie deren Dauer empfangen und/oder eine Tageszeit empfangen und/oder Informationen über das Wetter empfangen und/oder Charakterisierungen des Fahrers empfangen. Hierbei können die Charakterisierungen des Fahrers beschreiben, ob es sich um einen erfahrenen Fahrer handelt, welcher mit geringerer Konzentration sicher fahren kann. Alternativ oder zusätzlich können die Charakterisierungen des Fahrers körperliche Merkmale des Fahrers wie Größe und Gewicht beschreiben. Diese Informationen können in Form von Parametern in die Berechnungsvorschrift einfließen.

Bei dem Steuergerät handelt es sich insbesondere um eine elektronische Recheneinrichtung. Das Steuergerät kann unter Wissen von vorhandenen Personen sowie einer Veränderung der Sauerstoff-/Kohlenstoffdioxidkonzentration im Kraftfahrzeug bestimmen, wann die Sauerstoffkonzentration zu niedrig ist und damit die Müdigkeit des Fahrers eintreten wird.

Basierend auf einer Kenntnis über die weitere Fahrtstrecke inklusive der genannten Daten des Parametersatzes kann die Müdigkeitsverlaufskurve MVK ermittelt und anhand dieser eine Aussage darüber getroffen werden, wie hoch die Konzentration des Fahrers zu sein hat beziehungsweise wie sich die Sauerstoff-/Kohlenstoffdioxidkonzentration im Fahrverlauf verändert wird. Das Steuergerät ist somit in der Lage, mit einer gewissen Wahrscheinlichkeit vorherzusagen, wann der Fahrer wie müde sein wird, wodurch rechtzeitig sanfte Gegenmaßnahmen eingeleitet werden können. Als Gegenmaßnahme kann durch Anpassung einer Klima-/Lüftungsregelung eine Sauerstoffkonzentration in der Innenluft erhöht werden, durch frühzeitiges Warnen des Fahrers und/oder durch Ändern einer Navigationsroute die Müdigkeit des Fahrers bekämpft werden. Insbesondere bei Elektrofahrzeugen kann als Gegenmaßnahme eine Ladestrategie adaptiert werden, um somit den Fahrer unbewusst zu einer Pause zu zwingen. Insgesamt führen diese Gegenmaßnahmen dazu, dass der Fahrer schon vor eintretender Müdigkeit geschützt wird, bevor sich diese Müdigkeit auf seine Konzentration auswirkt.

Das Steuergerät berücksichtigt somit einerseits müdigkeitsfördernde Vorgänge wie etwa Sinken der Sauerstoffkonzentration, schwierige Fahrtrouten, Fahren mit Umluft, wenig erfahrene Fahrer, und andererseits müdigkeitshemmende Vorgänge wie Nutzung einer Klimaautomatik mit Adaption einer Frischluftzufuhr für einen besonders hohen Sauerstoffgehalt, abwechslungsreiche Fahrtstrecke, die aber nicht zu sehr fordert, eingelegte Pausen, und prognostiziert den Müdigkeitsverlauf damit stetig neu.

Mittels des Steuergeräts kann ein Abgleich erfolgen, ob es für bestimmte Fahrtabschnitte der vorausliegenden Fahrtstrecke einen maximal zulässigen Müdigkeitsgrad geben darf, um den Fahrer schon vorher explizit davor zu warnen. Mit anderen Worten wird eine Warnung im Kraftfahrzeug ausgegeben, wenn bei der Analyse festgestellt wird, dass zu einem vorgegebenen zukünftigen Zeitpunkt ein Müdigkeitsgrad des Fahrers einen vorgegebenen Schwellenwert überschreitet. Hierbei ist dieser Schwellenwert spezifisch für einen Fahrtabschnitt der vorausliegenden Fahrtstrecke, in welchem sich das Kraftfahrzeug zu dem vorgegebenen Zeitpunkt befindet.

Die Berechnungsvorschrift, bei welcher es sich um ein Modell zur Vorhersage des Müdigkeitsverlaufs handelt, kann während einer Entwicklung anhand von Studiendaten erzeugt werden. Um das zweite Verfahren für die Berechnungsvorschrift weiterzuentwickeln, kann das erste Verfahren herangezogen werden. Hierfür können Prognosen des zweiten Verfahrens für kommende Zeitpunkte gespeichert und anschließend beim Erreichen dieser Zeitpunkte mittels des ersten Verfahrens die aktuelle Müdigkeit des Fahrers bestimmt beziehungsweise erkannt werden. Über den Unterschied zwischen der aktuellen, erkannten Müdigkeit und der Prognose sowie unter Beachtung von zum Prognosezeitpunkt vorhandenen Daten, kann die Berechnungsvorschrift und somit das Modell zur Vorhersage des Müdigkeitsverlaufs adaptiert werden, sodass das Modell kontinuierlich weiterlernt und sich immer bessern an den Fahrer anpasst. Mit anderen Worten wird für einen vorgegebenen Prüfzeitpunkt anhand der Müdigkeitsverlaufskurve MVK der Müdigkeitsgrad M des Fahrers prädiziert, der prädizierte Müdigkeitsgrad M mit einem für diesen Prüfzeitpunkt anhand von Sensordaten ermittelten Müdigkeitsgrad M des Fahrers verglichen und die Berechnungsvorschrift in Abhängigkeit von einem Ergebnis des Vergleichs angepasst.

Durch die Verwendung des Sauerstoff-/Kohlenstoffdioxidsensors ist eine besonders genaue Erkennung der Müdigkeit des Fahrers möglich. Durch die Berücksichtigung von Fahrercharakteristika ist eine individuelle, auf den Fahrer abgestimmte Müdigkeitserkennung möglich, was ein besonders präzises Ermitteln der Müdigkeitsverlaufskurve MVK ermöglicht, da Menschen unterschiedlich schnell müde werden. Das zweite Verfahren, welches die Müdigkeitsprognose erlaubt, ermöglicht eine besonders gute Strategie zur Verhinderung von zu hoher Müdigkeit des Fahrers. Durch Berücksichtigung vielfältiger Daten, insbesondere der bevorstehenden Fahrtstrecke mit ihren Charakteristika, kann die Müdigkeit des Fahrers prognostiziert werden. Durch ein gestuftes und somit nacheinander erfolgendes Umsetzen jeweiliger Gegenmaßnahmen kann der Anstieg des Müdigkeitsgrads M vom Fahrer unbemerkt gebremst werden und erst spät eine richtige Müdigkeitswarnung gezeigt werden, wodurch eine besonders hohe Akzeptanz der Müdigkeitserkennung durch den Fahrer erreicht werden kann. Weiterhin ermöglichen die Verfahren eine Steigerung der Verkehrssicherheit.

Bei dem ersten Verfahren ist es somit vorgesehen, dass unterschiedliche Sensorwerte empfangen werden, zumindest anhand der Sensorwerte die aktuelle Müdigkeitsklasse des Fahrers festgestellt wird und die Gegenmaßnahme ausgelöst wird, welche von der Müdigkeitsklasse abhängt. Bei dem zweiten Verfahren ist es vorgesehen, dass die Müdigkeitsverlaufskurve MVK für die Müdigkeitsentwicklung des Fahrers über die Zeit t erstellt wird. Für unterschiedliche Fahrtabschnitte der vorausliegenden Fahrtstrecke können unterschiedliche Schwellenwerte vorgesehen sein, wobei für jeden Fahrtabschnitt ein maximal zulässiger Müdigkeitsgrad als Schwellenwert vorgegeben sein kann.

Die Müdigkeitsprognose und die in Abhängigkeit davon eingeleiteten Gegenmaßnahmen können eine Gefahr von Unfällen oder Fehlern reduzieren.

Insgesamt zeigt die Erfindung Verfahren für eine Müdigkeitserkennung, insbesondere eine prädiktive Müdigkeitserkennung, sowie Müdigkeitsgegenmaßnahmen.

### Bezugszeichenliste

- V10 bis V24: jeweilige Verfahrensschritte
- MVK: Müdigkeitsverlaufskurve
- M: Müdigkeitsgrad
- t: Zeit

## Patentansprüche

1. Verfahren zur Müdigkeitsbekämpfung eines Fahrers eines Kraftfahrzeugs, bei welchem
- anhand wenigstens eines Bewertungskriteriums eine Müdigkeitsklasse ermittelt wird, welche die Müdigkeit des Fahrers repräsentiert (V10),
- über eine Zuordnungsvorschrift, in welcher unterschiedlichen Müdigkeitsklassen jeweilige Gegenmaßnahmen zugeordnet sind, wenigstens eine Gegenmaßnahme für die ermittelte Müdigkeitsklasse ausgewählt wird (V11), und
- die wenigstens eine ausgewählte Gegenmaßnahme ausgelöst wird (V12).

2. Verfahren nach Anspruch 1, wobei die Müdigkeitsklasse anhand wenigstens eines der folgenden Bewertungskriterien ermittelt wird:
- Sensorwert einer Sensoreinrichtung, wobei der Sensorwert insbesondere einen CO2-Gehalt und/oder einen O2-Gehalt in der Luft im Kraftfahrzeug repräsentiert;
- Lenkradbetätigung;
- Nutzung eines Gas- oder Bremspedals;
- Vorkommen von als kritisch eingestuften Fahrmanövern;
- Öffnungsgrad der Augen des Fahrers;
- körperliche Eigenschaft des Fahrers;
- Fahrerfahrung des Fahrers.

3. Verfahren zur Müdigkeitsbekämpfung eines Fahrers eines Kraftfahrzeugs, bei welchem
- eine Berechnungsvorschrift herangezogen wird, mittels welcher anhand eines Parametersatzes eine Müdigkeitsverlaufskurve (MVK) erstellt werden kann, welche eine Müdigkeitsentwicklung des Fahrers über die Zeit (t) repräsentiert (V20),
- konkrete Werte für den Parametersatz für eine vorausliegende Fahrtstrecke ermittelt werden (V21),
- mittels der Berechnungsvorschrift unter Verwendung der ermittelten Werte für den Parametersatz die Müdigkeitsverlaufskurve (MVK) für die vorausliegende Fahrtstrecke ermittelt wird (V22),
- die Müdigkeitsverlaufskurve (MVK) analysiert wird (V23),
- in Abhängigkeit von einem Ergebnis der Analyse eine Gegenmaßnahme ausgelöst wird, durch welche wenigstens ein Wert eines veränderbaren Parameters des Parametersatzes gezielt verändert wird (V24).

4. Verfahren nach Anspruch 3, wobei eine Warnung im Kraftfahrzeug ausgegeben wird, wenn bei der Analyse festgestellt wird, dass zu einem vorgegebenen zukünftigen Zeitpunkt ein Müdigkeitsgrad (M) des Fahrers einen vorgegebenen Schwellenwert überschreitet.

5. Verfahren nach Anspruch 4, wobei der Schwellenwert spezifisch für einen Fahrtabschnitt der vorausliegenden Fahrtstrecke ist, in welchem sich das Kraftfahrzeug zu dem vorgegebenen Zeitpunkt befindet.

6. Verfahren nach einem der Ansprüche 3 bis 5, wobei für einen vorgegebenen Prüfzeitpunkt anhand der Müdigkeitsverlaufskurve (MVK) der Müdigkeitsgrad (M) des Fahrers prädiziert wird, der prädizierte Müdigkeitsgrad (M) mit einem für diesen Prüfzeitpunkt anhand von Sensordaten ermittelten Müdigkeitsgrad (M) des Fahrers verglichen wird und die Berechnungsvorschrift in Abhängigkeit von einem Ergebnis des Vergleichs angepasst wird.

7. Verfahren nach einem der Ansprüche 3 bis 6, wobei der Parametersatz einen Wert wenigstens eines der folgenden Parameter umfasst:
- Anzahl an Fahrzeuginsassen;
- Innenraumtemperatur des Kraftfahrzeugs;
- Eigenschaft des Fahrers, insbesondere Größe und/oder Gewicht und/oder Fahrerfahrungslevel;
- Anzahl und Dauer an eingelegten Pausen;
- Tageszeit;
- Wetter;
- Mediennutzung im Kraftfahrzeug;
- Eigenschaft der vorausliegenden Fahrtstrecke des Kraftfahrzeugs.

8. Verfahren nach einem der Ansprüche 3 bis 7, wobei die Müdigkeitsverlaufskurve (MVK) fahrerspezifisch ermittelt wird.

9. Verfahren nach einem der vorhergehenden Ansprüche, wobei als Gegenmaßnahme wenigstens eine der folgenden Aktionen durchgeführt wird:
- ein Anteil an Frischluft im Kraftfahrzeug erhöht wird;
- ein aktivierter Umluftbetrieb deaktiviert wird;
- eine Umwälzgeschwindigkeit von Luft im Kraftfahrzeug erhöht wird;
- wenigstens ein Fenster des Kraftfahrzeugs geöffnet wird;
- eine Warnung für den Fahrer im Kraftfahrzeug ausgegeben wird;
- ein Lautstärkepegel von Audioausgaben im Kraftfahrzeug erhöht wird;
- ein Blaulichtanteil wenigstens eines Bildschirms im Kraftfahrzeug erhöht wird;
- mittels reversibler Gurtstraffer der Fahrer gerüttelt wird;
- wenigstens ein Zwischenstopp durch Änderung einer Navigationsroute eingeplant wird;
- eine Ladestrategie des Kraftfahrzeugs angepasst wird.

10. Elektronische Recheneinrichtung, welche dazu eingerichtet ist, ein Verfahren nach einem der vorhergehenden Ansprüche durchzuführen.
